# EUROPÄISCHE PATENTANMELDUNG

(11) **EP 2 711 595 A1**
(43) Veröffentlichungstag der Anmeldung: **26.03.2014**
(21) Anmeldenummer: 12006638.6
(22) Anmeldetag: 21.09.2012
(51) Int. Cl.: F16K 1/44, F16K 31/06

(54) **Ventilvorrichtung mit Doppelsitz**

(71) Anmelder: Truma Gerätetechnik GmbH & Co. KG, 85640 Putzbrunn (DE)
(72) Erfinder: Achatz, Dieter, 81827 München (DE); Mini, Uwe, 85625 Glonn (DE); Brandtner, Josef, 82110 Germering (DE)
(74) Vertreter: Müller - Hoffmann & Partner

(57) **Zusammenfassung**

Eine Ventilvorrichtung weist eine Gehäuseeinrichtung (1) mit einem Fluideinlass (6) und einem Fluidauslass (7) auf. In dem Strömungsweg zwischen dem Fluideinlass (6) und dem Fluidauslass (7) ist eine äußere Ventileinrichtung (9) und in Reihe dazu eine innere Ventileinrichtung (10) angeordnet. Mit nur einer Magnetspuleneinrichtung (5) ist es möglich, sowohl die äußere Ventileinrichtung (9) als auch die innere Ventileinrichtung (10) zu öffnen. Mit Hilfe von separaten Federeinrichtungen (15, 21) können hingegen die beiden Ventileinrichtungen (9, 10) getrennt voneinander geschlossen gehalten werden.

## Beschreibung

Die Erfindung betrifft eine Ventilvorrichtung, insbesondere ein Magnetventil für Fluidströme.

Aufgrund von technischen Normen oder gesetzlichen Vorschriften ist es häufig erforderlich, dass Magnetventile mit einer doppelten Schließfunktion ausgestattet sind. Dies betrifft insbesondere Magnetventile, die zum Öffnen und Schließen eines Durchflusses von brennbarem Gas dienen. Um sicherzustellen, dass es jederzeit zuverlässig möglich ist, die Gaszufuhr zu unterbrechen, sind die Magnetventile mit der doppelten Schließfunktion, also einer Redundanz ausgestattet. Häufig sind zwei Magnetventile hintereinander in Reihe geschaltet, die sowohl bei entsprechender Ansteuerung, vor allem aber auch bei einem Stromausfall den Gasdurchfluss mittels einer oder zwei Dichteinrichtungen schließen.

Die Magnetventile sind häufig mit einer Fluid- bzw. Gasdurchflussregelung oder -begrenzung kombiniert, so dass es möglich ist, die Menge des Gasstroms zu dosieren. In manchen Fällen kann die Gasdurchflussregelung in ein Magnetventil integriert sein und stufenlos oder auch mehrstufig eine Regelung des Gasflusses zulassen. Die Gasdurchflussregelung kann eine Membran (Gummi, Stahl) mit Magnetspulen oder z.B. auch einen Piezoimpulserzeuger aufweisen. Das zum Erreichen der geforderten Redundanz erforderliche Hintereinanderschalten von zwei Magnetventilen erhöht den Aufwand nicht unerheblich. Insbesondere muss auch der zusätzliche zweite Dichtsitz mechanisch oder elektronisch überwacht werden, um ein zuverlässiges Funktionieren der Magnetventile sicherzustellen. In jedem Fall ist es erforderlich, dass die Gaszuführung unter allen Umständen, so auch bei einem Ausfall des elektrischen Stroms oder bei einem mechanischen Defekt, geschlossen werden kann.

Ein Beispiel für ein Doppel-Sicherheitsventil ist in der DE 195 25 384 C2 beschrieben. Dieses Sicherheitsventil weist zwei voneinander unabhängige, in Serie geschaltete sowie in einem gemeinsamen Gehäuse untergebrachte und gegen das Gehäuse abgestützte Ventile auf, die jedoch von einem gemeinsamen Magnetantrieb geöffnet werden können.

Ein ähnliches Doppel-Sicherheitsventil ist aus der EP 1 559 936 B1 bekannt, bei dem eine gemeinsame Magnetspule zwei in Serie geschaltete Ventile öffnet. Für jedes der Ventile ist ein eigenes Polstück vorgesehen.

Der Erfindung liegt die Aufgabe zugrunde, für eine derartige Ventilvorrichtung einen vereinfachten Aufbau anzugeben, wobei bei der Ventilvorrichtung zur Erreichung einer doppelten Schließfunktion zwei Ventile in Serie geschaltet und von einem gemeinsamen Magnetantrieb ansteuerbar sind.

Die Aufgabe wird erfindungsgemäß durch eine Ventilvorrichtung mit den Merkmalen von Anspruch 1 gelöst. Vorteilhafte Ausgestaltungen sind in den abhängigen Ansprüchen angegeben.

Eine erfindungsgemäße Ventilvorrichtung weist eine Gehäuseeinrichtung mit einem Fluideinlass und einem Fluidauslass auf, sowie eine in dem Strömungsweg zwischen dem Fluideinlass und dem Fluidauslass angeordnete äußere Ventileinrichtung, die in einem Ausgangszustand den Strömungsweg verschließt, eine in den Strömungsweg zwischen dem Fluideinlass und dem Fluidauslass sowie in Reihe zu der äußeren Ventileinrichtung angeordnete innere Ventileinrichtung, die in dem Ausgangszustand den Strömungsweg verschließt und eine Magnetspuleneinrichtung auf. Dabei umschließt die äußere Ventileinrichtung die innere Ventileinrichtung radial wenigstens teilweise, während die Magnetspuleneinrichtung die äußere Ventileinrichtung radial wenigstens teilweise umschließt. Die Magnetspuleneinrichtung kann gleichermaßen zum Öffnen der äußeren Ventileinrichtung wie auch zum Öffnen der inneren Ventileinrichtung in einem Erregungszustand ausgebildet sein, derart, dass in dem Erregungszustand eine von der Magnetspuleneinrichtung induzierte äußere magnetische Kraft auf die äußere Ventileinrichtung wirkt und dass eine von der Magnetspuleneinrichtung induzierte innere magnetische Kraft auf die innere Ventileinrichtung wirkt. Dabei kann die Magnetspuleneinrichtung wenigstens eine Magnetspule und genau ein Polstück aufweisen. Die innere Ventileinrichtung weist eine axial bewegliche Komponente auf, die über eine zwischen der inneren Ventileinrichtung und der äußeren Ventileinrichtung wirkende innere Federeinrichtung gegen die äußere Ventileinrichtung abgestützt ist.

Somit weist die erfindungsgemäße Ventilvorrichtung die äußere und die innere Ventileinrichtung auf, die miteinander dadurch integriert werden, dass die innere Ventileinrichtung zumindest teilweise in der äußeren Ventileinrichtung angeordnet ist. Die Magnetspuleneinrichtung umgibt dann die äußere Ventileinrichtung und damit die innere Ventileinrichtung. Dadurch ist es möglich, dass eine einzige Magnetspuleneinrichtung in dem Erregungszustand gemeinsam und unter Umständen auch gleichzeitig sowohl die äußere als auch die innere Ventileinrichtung öffnen kann.

Dadurch ist es nicht erforderlich, für jede der beiden Ventileinrichtungen eine eigene Magnetspuleneinrichtung mit zugehöriger Steuerung vorzusehen. Vielmehr genügt es, lediglich die eine Magnetspuleneinrichtung, die in diesem Fall auch nur eine Magnetspule aufweist, bereitzustellen und anzusteuern und mit ihr die beiden Ventileinrichtungen gemeinsam zu öffnen.

Bei einer später noch erläuterten Variante weist die Magnetspuleneinrichtung statt der nur einen Magnetspule zwei Magnetspulen auf, die getrennt voneinander schaltbar sind. Dabei ist es beabsichtigt, dass die einzelnen Magnetspulen jeweils individuell die ihnen zugeordnete Ventileinrichtung öffnen können.

Bei einer Stromlosschaltung der Magnetspuleneinrichtung können die beiden Ventileinrichtungen wieder in den (stromlosen) Ausgangszustand zurückgelangen, indem sie beide jeweils den Strömungsweg verschließen. Der Ausgangszustand ist insoweit als Dichtungs- oder Schließzustand zu verstehen. Durch die Hintereinanderschaltung der beiden Ventileinrichtungen ist somit die geforderte doppelte Sicherheit zum Verschließen des Strömungswegs gewährleistet.

Bei Erregung der Magnetspuleneinrichtung hingegen wird der Erregungszustand (Offenzustand) eingenommen, in dem die Magnetspuleneinrichtung eine magnetische Kraft induziert, die auf die äußere Ventileinrichtung wirkt und diese dadurch den Strömungsweg öffnet. Gleichzeitig bzw. allenfalls mit einem geringfügigen zeitlichen Versatz wird durch die Magnetspuleneinrichtung auch eine innere magnetische Kraft induziert, die auf die innere Ventileinrichtung wirkt und diese ebenfalls daraufhin den Strömungsweg öffnet. Der Erregungszustand kann somit auch als der normale Betriebszustand angesehen werden.

Die Bezeichnungen "äußere magnetische Kraft" und "innere magnetische Kraft" dienen lediglich zur besseren Kennzeichnung und damit Unterscheidung der beiden magnetischen Kräfte, die jeweils auf die äußere und auf die innere Ventileinrichtung wirken. Tiefer gehende physikalische Phänomene sollen durch diese Bezeichnungen jedoch nicht angedeutet werden. Somit bezieht sich also die "äußere" magnetische Kraft auf die "äußere" Ventileinrichtung und die "innere" magnetische Kraft auf die "innere" Ventileinrichtung. Die magnetischen Kräfte sollen jeweils die zugeordnete Ventileinrichtung öffnen und den Strömungsweg dadurch freigeben.

Die Magnetspuleneinrichtung weist nur ein einziges Polstück auf, im Gegensatz zu dem aus der EP 1 559 936 B1 bekannten Magnetventil, bei dem der Magnetspuleneinrichtung zwei Polstücke zugeordnet sind. Es hat sich herausgestellt, dass die mit dem einzigen Polstück generierbare (äußere) magnetische Kraft ausreicht, um sowohl die äußere als auch die innere Ventileinrichtung zu öffnen.

Die innere magnetische Kraft kann durch die Magneteinrichtung in die äußere Ventileinrichtung induziert werden und von dort auf die innere Ventileinrichtung wirken. Da die äußere Ventileinrichtung die innere Ventileinrichtung umgibt, kann es aus Platz- und Bauraumgründen schwierig werden, dass die (eine) Magneteinrichtung direkt auf die innere Ventileinrichtung wirkt. Demzufolge ist es vorteilhaft, wenn die innere magnetische Kraft praktisch indirekt durch die Magneteinrichtung, nämlich über die äußere Ventileinrichtung generiert wird. Die äußere Ventileinrichtung kann dann dementsprechend mit einem Joch ausgestattet sein, das bei entsprechender Erregung durch die außen liegende Magnetspuleneinrichtung die gewünschte innere magnetische Kraft erzeugt.

Der kompakte Aufbau der Ventilvorrichtung wird dadurch noch verbessert, dass die innere Ventileinrichtung bzw. bewegliche Komponenten der inneren Ventileinrichtung über die innere Federeinrichtung gegenüber der äußeren Ventileinrichtung abgestützt sind. Es ist somit nicht erforderlich, dass auch innere Federeinrichtung gegenüber dem Gehäuse abgestützt werden muss. Auf diese Weise kann z.B. die äußere Ventileinrichtung die innere Ventileinrichtung vollständig umschließen.

Bei einer Ausführungsform kann die äußere Ventileinrichtung ein axial bewegliches äußeres Dichtjoch und einen an dem äußeren Dichtjoch vorgesehen Jochanker aufweisen. Die innere Ventileinrichtung kann als bewegliche Komponente ein axial bewegliches inneres Dichtjoch und einen an dem inneren Dichtjoch vorgesehenen inneren Anker aufweisen. Zudem kann eine äußere Federeinrichtung vorgesehen sein, die zwischen der Gehäuseeinrichtung und dem äußeren Dichtjoch wirkt und derart vorgespannt ist, dass sie - insbesondere in dem Ausgangszustand - das äußere Dichtjoch gegen einen an der Gehäuseeinrichtung vorgesehenen äußeren Dichtsitz hält. Dementsprechend kann auch die innere Federeinrichtung vorgesehen sein, die zwischen dem äußeren Dichtjoch und dem inneren Dichtjoch wirkt und derart vorgespannt ist, dass sie - ebenfalls insbesondere in dem Ausgangszustand - das innere Dichtjoch gegen einen an der Gehäuseeinrichtung vorgesehenen Dichtsitz hält. Schließlich kann die Magnetspuleneinrichtung derart ausgestaltet sein, dass durch sie sowohl der Jochanker mit dem äußeren Dichtjoch gegen die Wirkung der äußeren Federeinrichtung als auch der innere Anker mit dem inneren Dichtjoch gegen die Wirkung der inneren Federeinrichtung axial bewegbar und in jeweils vorgegebenen Stellungen haltbar ist, um eine Fluidströmung von dem Fluideinlass zu dem Fluidauslass - insbesondere in dem Erregungs- bzw. Betriebszustand - zu ermöglichen. Die Fluidströmung kann selbstverständlich auch in umgekehrter Richtung erfolgen, also vom Fluidauslass zum Fluideinlass. Insoweit sind die Begriffe "Fluideinlass" und "Fluidauslass" nicht einschränkend zu verstehen.

Bei dieser Variante wird somit bei der äußeren Ventileinrichtung das äußere Dichtjoch mit Hilfe der äußeren Federeinrichtung vorgespannt und geschlossen, indem das äußere Dichtjoch gegen den äußeren Dichtsitz gedrückt wird. Bei Erregung der Magnetspuleneinrichtung wird die äußere magnetische Kraft erzeugt, so dass das äußere Dichtjoch gegen die Wirkung der äußeren Federeinrichtung von dem äußeren Dichtsitz abgehoben und der Strömungsweg freigegeben wird.

Analog wird bei der inneren Ventilrichtung das innere Dichtjoch durch die Wirkung der inneren Federeinrichtung gegen den inneren Dichtsitz gedrückt, wenn sich die Ventilvorrichtung im Ausgangszustand befindet. Bei Erregung der Magnetspuleneinrichtung hebt das innere Dichtjoch von dem inneren Dichtsitz ab und gibt den Strömungsweg frei.

Während sich die äußere Federeinrichtung und das äußere Dichtjoch gegenüber der Gehäuseeinrichtung abstützt, stützt sich die innere Federeinrichtung gegen das äußere Dichtjoch ab. Das bedeutet, dass die innere Ventileinrichtung innen in der äußeren Ventileinrichtung eingebaut ist und sich gegenüber der äußeren Ventileinrichtung abstützen kann.

Die innere Ventileinrichtung kann durch die innere Federeinrichtung und die äußere Ventileinrichtung kann durch die äußere Federeinrichtung schließbar sein, wobei die innere Ventileinrichtung und die äußere Ventileinrichtung durch die ihnen jeweils zugeordnete Federeinrichtung getrennt voneinander schließbar sein können. Das bedeutet, dass die beiden Ventileinrichtung jeweils eigenständig geschlossen werden können, auch dann, wenn die jeweils andere Ventileinrichtung, z.B. aufgrund einer Störung, noch geöffnet bleibt.

Die Magnetspuleneinrichtung kann demnach eine Magnetspule und (genau) ein von der Magnetspule umschlossenes Polstück aufweisen. Mit Hilfe des Polstücks ist es möglich, die gewünschte äußere magnetische Kraft zu generieren, mit der das äußere Dichtjoch der äußeren Ventileinrichtung vom Dichtsitz abgehoben werden kann. Zudem kann die magnetische Kraft des Polstücks auch auf die äußere Ventileinrichtung übertragen werden, so dass sie weiter auch auf die innere Ventileinrichtung wirken kann. Das Vorsehen eines weiteren, zweiten Polstücks erübrigt sich damit.

Die Magnetspule kann eine Anzugswicklung zum Bewegen des äußeren Dichtjochs und des inneren Dichtjochs gegen die Wirkungen der jeweiligen Federeinrichtungen, also zum Abheben der beiden Dichtjoche von den jeweiligen Dichtsitzen, d.h. zum Übergang vom Ausgangszustand in den Erregungszustand aufweisen. Weiterhin kann die Magnetspule eine Haltewicklung zum Halten des äußeren Dichtjochs und des inneren Dichtjochs in den vorgegebenen Stellungen im Erregungszustand aufweisen. Die vorgegebenen Stellungen können insbesondere durch jeweilige Anschläge für die beiden Dichtjoche definiert werden.

Mit Hilfe der - verhältnismäßig groß ausgeführten - Anzugswicklung ist es möglich, die erforderliche Kraft auf die beiden Dichtjoche - auch über eine größere Entfernung - auszuüben und die Dichtjoche gegen die Wirkungen der ihnen zugeordneten Federeinrichtungen zu bewegen. Die Haltewicklung hingegen dient nur noch zum Halten der beiden Dichtjoche in den abgehobenen Stellungen. Dementsprechend kann die Haltewicklung kleiner dimensioniert werden. Sie benötigt in der Regel auch einen geringeren Strom, weil sich die beiden Dichtjoche in den abgehobenen Stellungen der Magnetspuleneinrichtung deutlich angenähert haben, so dass keine größere Distanz überbrückt werden muss.

Bei einer Variante kann die Magnetspuleinrichtung auch zwei elektrisch voneinander unabhängige Systeme bzw. zwei Magnetspulen aufweisen, die z.B. axial zueinander angeordnet sind. Die beiden Magnetspulen können separat voneinander geschaltet werden, um das gewünschte Öffnen und Schließen der Ventileinrichtungen zu bewirken. So kann z.B. durch entsprechendes Ansteuern der Magnetspulen erreicht werden, dass die innere Ventileinrichtung getrennt von der äußeren Ventileinrichtung geschaltet, also geöffnet oder geschlossen wird.

Insbesondere kann eine erste der Magnetspulen zum Öffnen der äußeren Ventileinrichtung und eine zweite Magnetspule zum Öffnen der inneren Ventileinrichtung dienen, wobei das Polstück von der ersten Magnetspule umschlossen ist, um die äußere magnetische Kraft zu bewirken.

Es kann eine Steuerung vorgesehen sein, zum getrennten Ansteuern der beiden Magnetspulen. Damit ist es möglich, gezielt z.B. nur die äußere oder nur die innere Ventileinrichtung zu öffnen, während die jeweils andere Ventileinrichtung geschlossen bleibt. Diese Möglichkeit kann z.B. zum Prüfen der Ventilvorrichtung auf Dichtigkeit der einzelnen Ventileinrichtungen genutzt werden. So sind Prüfvorschriften bekannt, die ein separates Prüfen einzelner, in Serie geschalteter Ventileinrichtungen vorschreiben.

Auch dann, wenn die Magnetspuleneinrichtung mehrere Magnetspulen aufweist, ist es möglich, dass die Magnetspulen jeweils eine Anzugswicklung und eine Haltewicklung aufweisen, um die oben beschriebenen Wirkungen zu erzielen.

Insbesondere kann wenigstens eine der Magnetspulen eine Anzugswicklung zum Abheben des jeweils zugeordneten Dichtjochs von dem jeweiligen Dichtsitz und eine Haltewicklung zum Halten des jeweils zugeordneten Dichtjochs in der abgehobenen Stellung aufweisen.

Das Polstück, der Jochanker und der innere Anker können axial hintereinander liegend angeordnet sein. Dadurch ist es einerseits möglich, einen sehr kompakten Aufbau der Ventilvorrichtungen zu erreichen. Zum andern kann die durch die Magnetspule in dem Polstück induzierte magnetische Kraft günstig auf den zu der äußeren Ventileinrichtung gehörenden Jochanker und von diesem dann auf den zu der inneren Ventileinrichtung gehörenden inneren Anker übertragen werden.

Dementsprechend kann der Jochanker in dem Erregungszustand, in dem die Magnetspuleneinrichtung erregt ist, ein magnetisches Joch für den inneren Anker bilden.

Die Magnetspule kann wenigstens einen Bereich umschließen, in dem der Jochanker axial hin- und herbewegbar ist. Dadurch ist es zuverlässig möglich, die erforderlichen magnetischen Kräfte auf den Jochanker auszuüben.

Die äußere Ventileinrichtung und die innere Ventileinrichtung können im Wesentlichen zylindrisch aufgebaut sein. Das bedeutet, dass sie z.B. im Wesentlichen hülsenförmig gestaltet sein können, so dass die innere Ventileinrichtung leicht in die äußere Ventileinrichtung eingeschoben werden kann.

Bei einer Ausführungsform kann die äußere Ventileinrichtung in ihrem Inneren einen Hohlraum bilden, wobei die innere Ventileinrichtung wenigstens teilweise in dem Hohlraum angeordnet ist. Die innere Ventileinrichtung kann auf diese Weise ganz oder teilweise im Inneren der äußeren Ventileinrichtung bzw. im Inneren des von der äußeren Ventileinrichtung umschriebenen Hohlraums angeordnet werden, was einerseits einen kompakten Aufbau der gesamten Ventilvorrichtung und andererseits das gewünschte direkte Zusammenwirken der beiden Ventileinrichtungen mit der Magnetspuleneinrichtung ermöglicht.

Das äußere Dichtjoch kann an seinem dem äußeren Ende zugewandten stirnseitigen Ende eine Dichtung tragen, während das innere Dichtjoch an seinem dem inneren Dichtsitz zugewandten stirnseitigen Ende eine Dichtung trägt. Mit den beiden stirnseitigen Enden können die beiden Dichtjoche jeweils in Kontakt mit den zugehörigen Dichtsitzen gebracht werden, um den Strömungsweg zu verschließen.

Bei einer Variante können die Strömungsquerschnitte im Inneren der Gehäuseeinrichtung größer sein als in dem Fluideinlass und/oder in dem Fluidauslass. Dadurch kann die Fließgeschwindigkeit des Gasflusses bzw. die Strömungswiderstände im Inneren der Ventileinrichtung möglichst gering gehalten werden.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: eine erfindungsgemäße Ventilvorrichtung in schematischer Schnittdarstellung; und
- **Fig. 2**: eine Variante der Ventilvorrichtung.

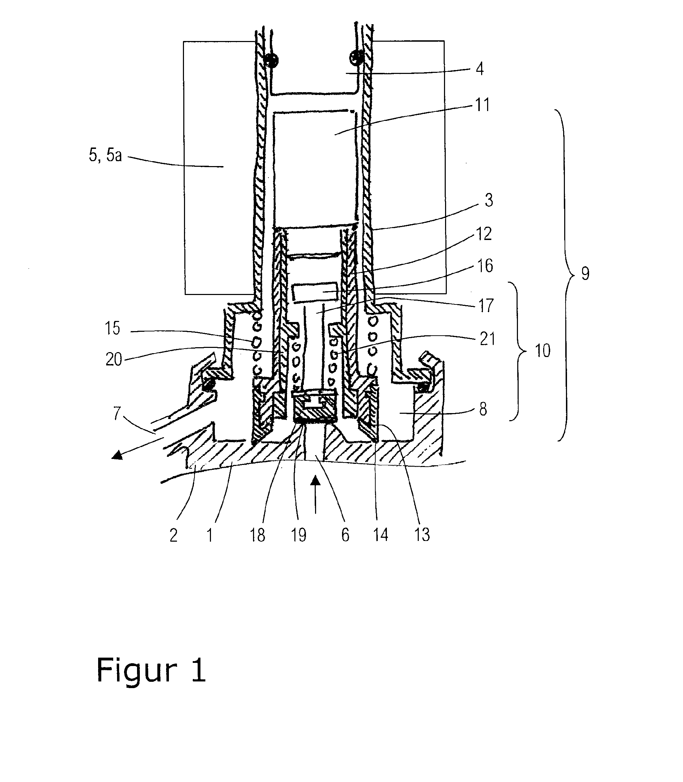

Die in Fig. 1 gezeigte erfindungsgemäße Ventilvorrichtung weist eine Gehäuseeinrichtung 1 mit einem Ventilblock 2 und einem mit dem Ventilblock 2 fest verbundenen Dom 3 auf. An dem oberen stirnseitigen Ende ist ein Polstück 4 dichtend eingesetzt. Der Dom 3 wird von einer zu einer Magnetspuleneinrichtung 5 gehörenden Magnetspule 5a umschlossen, die über eine nicht dargestellte Steuerung stromlos geschaltet oder erregt werden kann.

Bei entsprechender Ausgestaltung der Steuerung ist es auch möglich, die später noch erläuterten Strömungsquerschnitte stufenlos oder gestuft zu verändern und dadurch eine Steuerung des Fluidstroms (Flüssigkeits- bzw. Gasstrom) zu ermöglichen.

In dem Ventilblock 1 ist an der Unterseite ein Gaseinlass 6 und seitlich ein Gasauslass 7 vorgesehen. Über den Gaseinlass 6 kann Gas - bzw. bei einem Flüssigkeitsventil auch Flüssigkeit - in das Innere der Gehäuseeinrichtung 1 , insbesondere in eine durch den Ventilblock 2 und den Dom 3 gebildete Ventilkammer 8 einströmen und nachfolgend über den Gasauslass 7 wieder ausströmen.

Die Strömungsrichtung kann jedoch - bei einer anderen Ausführungsform - auch umgekehrt gerichtet sein, so dass der Gasauslass 7 dann als Gaseinlass und der Gaseinlass 6 dann als Gasauslass dienen können. Für die Funktion und Zuverlässigkeit der Ventilvorrichtung ist insoweit die Strömungsrichtung unerheblich.

In der Ventilkammer 8 sind eine äußere Ventileinrichtung 9 und eine innere Ventileinrichtung 10 vorgesehen. Die jeweiligen Längen der äußeren Ventileinrichtung 9 und der inneren Ventileinrichtung 10 sind durch geschweifte Klammern in Fig. 1 gekennzeichnet. Die geschweiften Klammern beziehen sich nicht auf die von ihnen umschlossenen Bezugszeichen, sondern lediglich auf die Baulängen der beiden Ventileinrichtung 9, 10.

Die äußere Ventileinrichtung 9 weist einen Jochanker 11 auf, der stirnseitig auf einem äußeren Dichtjoch 12 aufgesetzt ist.

Das äußere Dichtjoch 12 ist hülsenförmig ausgebildet und trägt an seiner Stirnseite eine Profildichtung 13, die - wie in Fig. 1 gezeigt - gegen einen äußeren Dichtsitz 14 gedrückt wird, der an dem Ventilblock 2 ausgebildet ist.

Wirkungsmäßig zwischen der Gehäuseeinrichtung 1 bzw. einem durch den Dom 3 gebildeten Absatz und der äußeren Ventileinrichtung 9 bzw. dem äußeren Dichtjoch 12 ist eine äußere Federeinrichtung 15 in Form einer Spiralfeder vorgesehen. Die äußere Federeinrichtung 15 ist vorgespannt und drückt dadurch zuverlässig die Profildichtung 13 gegen den äußeren Dichtsitz 14, wenn keine weiteren Kräfte auf das äußere Dichtjoch 12 wirken, also die Magnetspule 5a stromlos geschaltet ist.

Wenn hingegen die Magnetspule 5a erregt wird, induziert sie über das Polstück 4 eine magnetische Kraft (sogenannte äußere magnetische Kraft), die auf den Jochanker 11 wirkt und diesen zusammen mit dem äußeren Dichtjoch 12 gegen die Wirkung der äußeren Federeinrichtung 15 bewegt. Dadurch hebt die Profildichtung 13 von dem äußeren Dichtsitz 14 ab und gibt insoweit den Strömungsweg frei.

Im Inneren der äußeren Ventileinrichtung 9 ist die innere Ventileinrichtung 10 vorgesehen. Die innere Ventileinrichtung 10 weist einen inneren Anker 16 auf, der mit einem inneren Dichtjoch 17 verbunden ist. Der innere Anker 16 kann mit dem inneren Dichtjoch 17 einstückig verbunden oder auch getrennt von dem Dichtjoch 17 aufgebaut sein. Stirnseitig trägt das innere Dichtjoch 17 eine Dichtung 18, die - wie in Fig. 1 gezeigt - gegen einen inneren Dichtsitz 19 wirkt und dadurch den Strömungsweg an dem Gaseinlass 6 verschließt.

Wie die äußere Ventileinrichtung 9 ist auch die innere Ventileinrichtung 10 axial innerhalb bestimmter Grenzen bewegbar. Zu diesem Zweck ist das innere Dichtjoch 17 mit dem inneren Anker 16 und der Dichtung 18 in einem von dem äußeren Dichtjoch 12 radial umschlossenen Hohlraum axial beweglich.

Im Inneren des äußeren Dichtjochs 12 ist eine Führungshülse 20 vorgesehen, die insoweit Bestandteil des äußeren Dichtjochs 12 ist. Zwischen dem äußeren Dichtjoch 12 und dem inneren Dichtjoch 17 ist eine innere Federeinrichtung 21 angeordnet. Die innere Federeinrichtung 21 ist vorgespannt und drückt das innere Dichtjoch 17 mit der Dichtung 18 gegen den inneren Dichtsitz 19. Dabei ist die innere Federeinrichtung 21 derart ausgelegt, dass ihre Vorspannung auch dann noch ausreicht, den inneren Dichtsitz 19 zuverlässig zu verschließen, wenn das äußere Dichtjoch 12 bereits durch die Wirkung der Magnetspule 5a oder durch eine Störung der äußeren Federeinrichtung 15 abgehoben, also nach oben bewegt wurde. Die innere Federeinrichtung 21 drückt auch dann die Dichtung 18 gegen den inneren Dichtsitz 19.

Wenn die Magnetspule 5a erregt wird, wird mehr oder weniger gleichzeitig mit der Kraftwirkung des Polstücks 4 auf den Jochanker 11 auch in dem Jochanker 11 eine magnetische Kraft (innere magnetische Kraft) induziert, die auf den inneren Anker 16 des inneren Dichtjochs 17 wirkt und dadurch das innere Dichtjoch 17 mit dem inneren Anker 16 in Richtung des Jochankers 11 verlagert. Dadurch wird die Dichtung 18 von dem inneren Dichtsitz 19 gegen die Wirkung der inneren Federeinrichtung 21 abgehoben.

In der Praxis wird kaum ein Zeitunterschied zwischen dem Öffnen der äußeren Ventileinrichtung 9 und der inneren Ventileinrichtung 10 feststellbar sein, wenn die Magnetspule 5a erregt wird. Durch die axiale Hintereinanderanordnung des Polstücks 4, des Jochankers 11 und des inneren Ankers 16 werden unmittelbar die äußere magnetische Kraft und die innere magnetische Kraft bewirkt, um die beiden Ventileinrichtungen 9, 10 zu öffnen.

Wenn die Magnetspule 5a stromlos geschaltet wird, gelangen das äußere Dichtjoch 12 durch die Wirkung der äußeren Federeinrichtung 15 und das innere Dichtjoch 17 durch die Wirkung der inneren Federeinrichtung 21 unmittelbar in ihre Ausgangsstellungen zurück und verschließen die Dichtsitze 14, 19, wie in der Figur gezeigt ist.

Auch dann, wenn eine der beiden Ventileinrichtungen 9, 10 gestört ist, z.B. dadurch, dass eine der Federeinrichtungen 15, 21 nicht funktioniert, kann die jeweils andere, noch funktionsfähige Ventileinrichtung die ihr zugeordnete Dichtung gegen den zugehörigen Dichtsitz drücken und dadurch den Gasfluss zuverlässig unterbinden. Auf diese Weise wird die geforderte doppelte Sicherheit der Ventilvorrichtung erreicht.

In der Magnetspule 5a können eine Anzugswicklung und eine Haltewicklung vorgesehen sein, die jedoch in Fig. 1 nicht dargestellt sind. Die Anzugswicklung ist relativ groß dimensioniert, um ausreichend starke Magnetkräfte entwickeln zu können, mit denen das äußere Dichtjoch 12 und das innere Dichtjoch 17 gegen die Wirkungen der jeweiligen Federeinrichtungen 15, 21 bewegt werden können. Wenn die jeweiligen geöffneten Stellungen erreicht sind, d.h. insbesondere, wenn der Jochanker 11 gegen das Polstück 4 und der innere Anker 16 gegen den Jochanker 11 anschlägt, wird die Haltewicklung aktiviert, die mit einem deutlich geringeren Strom und geringerer Baugröße in der Lage ist, die beiden Ventileinrichtungen 9, 10 offen zu halten. Dadurch kann im nennenswerten Umfang Energie gespart werden.

Die Dichtheit im geschlossenen bzw. stromlosen Zustand wird durch die beiden federbelasteten Jochkerne bzw. Dichtjoche 12, 17 innen und außen garantiert. Die beiden Dichtungen 13, 18 sind wirkungsmäßig entkoppelt und jeweils unabhängig voneinander über die beiden zugeordneten Dichtjoche 12, 17 bewegbar.

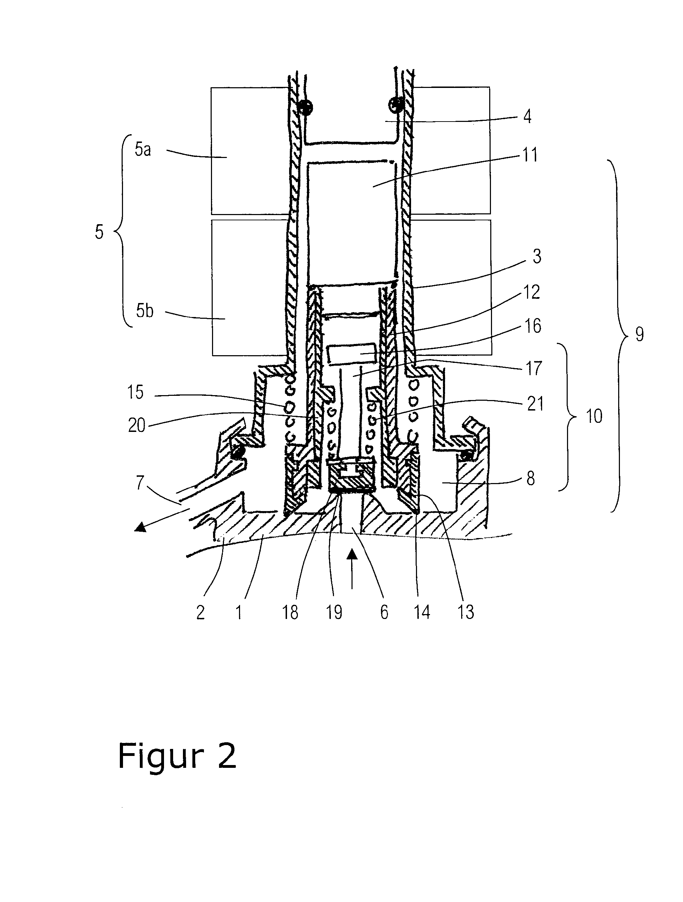

Fig. 2 zeigt eine Variante der Ventilvorrichtung von Fig. 1.

Während bei der Ventilvorrichtung von Fig. 1 nur eine Magnetspule 5 vorgesehen ist, sind bei der Vorrichtung von Fig. 2 zwei gemeinsam als Magnetspuleneinrichtung 5 dienende Magnetspulen 5a, 5b axial zueinander angeordnet. Die übrigen Bauelemente sind unverändert geblieben, so dass sich eine wiederholte Beschreibung erübrigt.

Die erste, in Fig. 2 obere, Magnetspule 5a dient zum Öffnen der äußeren Ventileinrichtung 9, während die zweite, in Fig. 2 untere, Magnetspule 5b zum Öffnen der inneren Ventileinrichtung 10 dient. Dementsprechend erzeugt die erste Magnetspule 5a ein Magnetfeld, das im Wesentlichen über das Polstück 4 nur auf den Jochanker 11 wirkt. Das aufgrund des Fehlens eines weiteren Polstücks schwächere Magnetfeld der zweiten Magnetspule 5b wirkt hingegen überwiegend auf den inneren Anker 16.

Darüber hinaus kann eine Steuerung vorgesehen sein, zum individuellen Ansteuern der beiden Magnetspulen 5a, 5b. Die Magnetspulen 5a, 5b können wie die oben beschriebene Magnetspule 5 ebenfalls jeweils eine Anzugswicklung und eine Haltewicklung aufweisen, um die ihnen zugeordneten Anker anzuheben und nachfolgend in der Offenstellung zu halten.

Somit ist es möglich, die innere und die äußere Ventileinrichtung 9, 10 individuell, also einzeln anzusteuern und beliebig zu öffnen bzw. zu schließen. Z.B. kann die erste Magnetspule 5a erregt werden und so die äußere Ventileinrichtung 9 öffnen, während die zweite Magnetspule 5b unerregt bleibt, so dass die innere Ventileinrichtung 10 geschlossen bleibt. Umgekehrt kann die zweite Magnetspule 5b erregt werden und die erste Magnetspule 5a unerregt bleiben, so dass die innere Ventileinrichtung 10 geöffnet und die äußere Ventileinrichtung 9 geschlossen ist.

Das zielgerichtete Öffnen und Schließen der einzelnen Ventileinrichtungen 9, 10 erlaubt es z.B., gezielt die Dichtigkeit der Ventileinrichtungen zu prüfen, was unter Umständen von einschlägigen technischen Vorschriften verlangt wird.

## Patentansprüche

1. Ventilvorrichtung, mit
- einer Gehäuseeinrichtung (1) mit einem Fluideinlass (6) und einem Fluidauslass (7);
- einer in dem Strömungsweg zwischen dem Fluideinlass (6) und dem Fluidauslass (7) angeordneten äußeren Ventileinrichtung (9), die in einem Ausgangszustand den Strömungsweg verschließt;
- einer in dem Strömungsweg zwischen dem Fluideinlass (6) und dem Fluidauslass (7) sowie in Reihe zu der äußeren Ventileinrichtung (9) angeordneten inneren Ventileinrichtung (10), die in dem Ausgangszustand den Strömungsweg verschließt; und mit
- einer Magnetspuleneinrichtung (5);
wobei
- die äußere Ventileinrichtung (9) die innere Ventileinrichtung (10) radial wenigstens teilweise umschließt;
- die Magnetspuleneinrichtung (5) die äußere Ventileinrichtung (9) radial wenigstens teilweise umschließt;
- die Magnetspuleneinrichtung (5) gleichermaßen zum Öffnen der äußeren Ventileinrichtung (9) wie auch zum Öffnen der inneren Ventileinrichtung (10) in einem Erregungszustand ausgebildet ist, derart, dass in dem Erregungszustand eine von der Magnetspuleneinrichtung (5) induzierte äußere magnetische Kraft auf die äußere Ventileinrichtung (9) wirkt und dass eine von der Magnetspuleneinrichtung (5) induzierte innere magnetische Kraft auf die innere Ventileinrichtung (10) wirkt;
- die Magnetspuleneinrichtung (5) wenigstens eine Magnetspule (5, 5a, 5b) und genau ein Polstück (4) aufweist; und wobei
- die innere Ventileinrichtung (10) eine axial bewegliche Komponente (16, 17) aufweist, die über eine zwischen der inneren Ventileinrichtung (10) und der äußeren Ventileinrichtung (9) wirkende innere Federeinrichtung (21) gegen die äußere Ventileinrichtung (9) abgestützt ist.

2. Ventilvorrichtung nach Anspruch 1, **dadurch gekennzeichnet, dass** die innere magnetische Kraft durch die Magnetspuleneinrichtung (5) in die äußere Ventileinrichtung (9) induziert wird und von dort auf die innere Ventileinrichtung (10) wirkt.

3. Ventilvorrichtung nach Anspruch 1 oder 2, wobei
- die äußere Ventileinrichtung (9) ein axial bewegliches äußeres Dichtjoch (12) und einen an dem äußeren Dichtjoch (12) vorgesehenen Jochanker (11) aufweist;
- die innere Ventileinrichtung (10) als axial bewegliche Komponente ein axial bewegliches inneres Dichtjoch (17) und einen an dem inneren Dichtjoch (17) vorgesehenen inneren Anker (16) aufweist;
- eine äußere Federeinrichtung (15) vorgesehen ist, die zwischen der Gehäuseeinrichtung (1) und dem äußeren Dichtjoch (12) wirkt und derart vorgespannt ist, dass sie das äußere Dichtjoch (12) gegen einen an der Gehäuseeinrichtung (1) vorgesehenen äußeren Dichtsitz (14) hält;
- die innere Federeinrichtung (21) vorgesehen ist, die zwischen dem äußeren Dichtjoch (12) und dem inneren Dichtjoch (17) wirkt und derart vorgespannt ist, dass sie das innere Dichtjoch (17) gegen einen an der Gehäuseeinrichtung (1) vorgesehenen inneren Dichtsitz (19) hält; und wobei
- die Magnetspuleneinrichtung (5) derart ausgestaltet ist, dass durch sie sowohl der Jochanker (11) mit dem äußeren Dichtjoch (12) gegen die Wirkung der äußeren Federeinrichtung (15) als auch der innere Anker (16) mit dem inneren Dichtjoch (17) gegen die Wirkung der inneren Federeinrichtung (21) axial bewegbar und in jeweils vorgegebenen Stellungen haltbar ist, um eine Fluidströmung von dem Fluideinlass (6) zu dem Fluidauslass (7) oder in umgekehrter Richtung zu ermöglichen.

4. Ventilvorrichtung nach einem der vorhergehenden Ansprüche, **dadurch gekennzeichnet, dass**
- die innere Ventileinrichtung (10) durch die innere Federeinrichtung (21) und die äußere Ventileinrichtung (9) durch die äußere Federeinrichtung (15) schließbar ist; und dass
- die innere Ventileinrichtung (10) und die äußere Ventileinrichtung (9) durch die ihnen jeweils zugeordnete Federeinrichtung (21, 15) getrennt voneinander schließbar sind.

5. Ventilvorrichtung nach einem der vorhergehenden Ansprüche, **dadurch gekennzeichnet, dass**
- die Magnetspuleneinrichtung wenigstens zwei Magnetspulen (5a, 5b) aufweist, die getrennt voneinander schaltbar sind;
- eine erste der Magnetspulen (5a) zum Öffnen der äußeren Ventileinrichtung (9) und eine zweite Magnetspule (5b) zum Öffnen der inneren Ventileinrichtung (10) dient; und dass
- das eine Polstück (4) von der ersten Magnetspule (5a) umschlossen ist.

6. Ventilvorrichtung nach einem der vorhergehenden Ansprüche, **dadurch gekennzeichnet, dass** eine Steuerung vorgesehen ist, zum getrennten Ansteuern der beiden Magnetspulen (5a, 5b).

7. Ventilvorrichtung nach einem der vorhergehenden Ansprüche, **dadurch gekennzeichnet, dass** wenigstens eine der Magnetspulen (5, 5a, 5b) eine Anzugswicklung zum Abheben des jeweils zugeordneten Dichtjochs (12, 17) von dem jeweiligen Dichtsitz (14, 19) und eine Haltewicklung zum Halten des jeweils zugeordneten Dichtjochs (12, 17) in der abgehobenen Stellung aufweist.

8. Ventilvorrichtung nach einem der vorhergehenden Ansprüche, **dadurch gekennzeichnet, dass** die Magnetspule (5) eine Anzugswicklung zum Bewegen des äußeren Dichtjochs (12) und des inneren Dichtjochs (17) gegen die Wirkungen der jeweiligen Federeinrichtungen (15, 21) sowie eine Haltewicklung zum Halten des äußeren Dichtjochs (12) und des inneren Dichtjochs (17) in den vorgegebenen Stellungen aufweist.

9. Ventilvorrichtung nach einem der vorhergehenden Ansprüche, **dadurch gekennzeichnet, dass** das Polstück (4), der Jochanker (11) und der innere Anker (16) axial hintereinander liegend angeordnet sind.

10. Ventilvorrichtung nach einem der vorhergehenden Ansprüche, **dadurch gekennzeichnet, dass** der Jochanker (11) in einem Fall, in dem die Magnetspuleneinrichtung (5) erregt ist, ein magnetisches Joch für den inneren Anker (16) bildet.

11. Ventilvorrichtung nach einem der vorhergehenden Ansprüche, **dadurch gekennzeichnet, dass** die Magnetspule (5) wenigstens einen Bereich umschließt, in dem der Jochanker (11) axial hin und her bewegbar ist.

12. Ventilvorrichtung nach einem der vorhergehenden Ansprüche, **dadurch gekennzeichnet, dass** die äußere Ventileinrichtung (9) und die innere Ventileinrichtung (10) im Wesentlichen zylindrisch aufgebaut sind.

13. Ventilvorrichtung nach einem der vorhergehenden Ansprüche, **dadurch gekennzeichnet, dass**
- die äußere Ventileinrichtung (9) in ihrem Inneren einen Hohlraum bildet; und dass
- die innere Ventileinrichtung (10) wenigstens teilweise in dem Hohlraum angeordnet ist.

14. Ventilvorrichtung nach einem der vorhergehenden Ansprüche, **dadurch gekennzeichnet, dass**
- das äußere Dichtjoch (12) an seinem dem äußeren Dichtsitz (14) zugewandten stirnseitigen Ende eine Dichtung (13) trägt; und dass
- das innere Dichtjoch (17) an seinem dem inneren Dichtsitz (19) zugewandten stirnseitigen Ende eine Dichtung (18) trägt.
